# DEMANDE DE BREVET EUROPEEN

(11) **EP 3 349 338 A1**
(43) Date de publication de la demande: **18.07.2018**
(21) Numéro de dépôt: 18151254.2
(22) Date de dépôt: 11.01.2018
(51) Int. Cl.: H02K 5/22, H02K 11/33

(54) **MOTEUR ÉLECTRIQUE TUBULAIRE À AIMANTS PERMANENTS**

(30) Priorité: 13.01.2017 FR 1750290
(71) Demandeur: Selni, 58000 Nevers (FR)
(72) Inventeur: FLOCCO, Bruno, 60300 Senlis (FR); VIDAL, Philippe, 03340 Neuilly-le-Real (FR)
(74) Mandataire: Gevers SA

(57) **Abrégé**

La présente invention concerne un moteur électrique tubulaire à aimants permanents comportant au moins un rotor (1) constitué d'au moins un aimant permanent (2) solidaire d'un arbre (11) s'étendant à travers un stator (3) portant une pluralité de bobines, et une carte électronique, et éventuellement un réducteur (10) ; ledit moteur est remarquable en ce qu'il comporte un connecteur (15) obtenu dans un matériau isolant électriquement, comprenant un flasque qui présente une section droite de même forme que la section droite du corps du stator (3), une face dite intérieure faisant droit au corps du stator (3) et/ou au corps du réducteur (10) et une face opposée dite extérieure, des moyens de solidarisation dudit flasque sur le corps du stator (3) et/ou le corps du réducteur (10), et des bornes conductrices (24) faisant saillie de la face intérieure pour assurer le contact avec des fiches (27) connectées aux bobines du stator (3) et faisant saillie de la face extérieure entre des pattes de clipsage (25) de la carte électronique (14), lesdites pattes de clipsage (25) étant alignées et étant aptes à recevoir par clipsage la carte électronique (14) de telle sorte que lesdites bornes conductrices (24) entrent en contact avec les pistes de la carte électronique (14) lorsque cette dernière est clipsée entre les pattes de clipsage (25).

## Description

### Domaine technique

La présente invention concerne un moteur tubulaire à aimant permanent notamment destiné à être placé à l'intérieur d'un actionneur tubulaire pour des applications domotiques permettant notamment de dérouler et/ou enrouler des volets roulants, des toiles, des stores, des écrans ou similaires. Toutefois, le moteur suivant trouvera de nombreuses autres applications notamment pour l'entraînement d'outils électroportatifs tels qu'une ponceuse ou une perceuse par exemple, du tambour d'une machine à laver, etc...

### Etat de la technique

Dans le domaine des actionneurs électromécaniques permettant le pilotage motorisé des éléments d'occultation ou de protection solaire dans un bâtiment, tels que des volets roulants ou des stores, il est bien connu d'utiliser des moteurs électriques synchrones à commutation électronique de faible puissance dont les dimensions radiales sont réduites pour être intégré à un actionneur tubulaire.

De tels moteurs doivent présenter un couple important sous un faible encombrement radial de manière à pouvoir être intégré dans un tube d'enroulement de volet ou de store par exemple. Ainsi, les dimensions particulières incitent à réaliser des moteurs longs, la longueur du moteur compensant sa faible section pour obtenir la puissance nécessaire à l'entraînement du volet ou du store.

La plupart des moteurs utilisés pour ce type d'application consiste dans des moteurs à courant continu à balais, comprenant un rotor bobiné et un stator à aimants permanents en ferrite. Le rotor est relié à un collecteur tournant. Le courant est injecté via les balais au collecteur.

Ce type de moteur présente de nombreux inconvénients. Outre le fait que ces moteurs sont encombrants, procurent un couple insuffisant pour des applications de volets roulants ou de stores, et sont trop bruyants, le collecteur de ces derniers provoquent des arcs qui usent rapidement le commutateur et génèrent des parasites dans le circuit d'alimentation.

Afin de remédier à ces inconvénients, ces moteurs sont désormais remplacés par des moteurs dits brushless fonctionnant sans balais. Ces moteurs brushless comprennent un stator bobiné tandis que les aimants sont placés sur le rotor, un système électronique de commande assurant la commutation du courant dans les enroulements statoriques.

De tels moteurs sont notamment décrits dans les demandes de brevet européen EP 2 224 581 et dans la demande de brevet international WO 2012/123575.

Le document EP 2 224 581 décrit un moteur électrique tubulaire comprenant un corps de stator, équipé d'un noyau ferromagnétique et des enroulements respectifs, et un conducteur constitué par une tige insérée de manière coulissante et coaxiale dans le corps de stator. La tige comprend un ensemble d'aimants permanents répartis uniformément le long de l'axe longitudinal de ladite tige et alternant avec des éléments d'entretoise de raccordement en matériau ferromagnétique. Ledit noyau ferromagnétique a une structure modulaire comprenant une pluralité de modules ferromagnétiques adjacents réalisés par pressage de composites magnétique doux. Les enroulements qui sont, en particulier, des enroulements triphasés sont constitués de bobines toroïdales connectées à une source d'alimentation électrique par l'intermédiaire interposé de moyens pour commander les courants dans les enroulements eux-mêmes, lesdits moyens de commande étant constitués d'une carte électronique comprenant un usuel onduleur triphasé et des capteurs pour mesurer l'intensité du champ magnétique et étant disposé le long de l'une des parois longitudinales du corps du stator.

La position de la carte électronique, le long de l'une des parois longitudinales du corps du stator augmente considérablement l'encombrement radial du moteur de sorte que ce dernier n'est pas adapté pour être intégré à un actionneur tubulaire dont les dimensions radiales sont réduites.

Par ailleurs, le document WO2012/123575 décrit un moteur électrique comprenant un rotor et un stator bobiné, le rotor comprenant un arbre et deux disques montés fixes en rotation sur l'arbre et équipés d'aimants permanents, une portion, dite externe, du stator s'étendant au niveau de chaque disque axialement parallèlement à un axe de rotation du rotor et radialement au-delà de celui-ci en partant de l'axe. Ce stator comprend une pluralité de barres disjointes qui sont réalisées dans un matériau magnétiquement conducteur et dont certaines parties formant la portion externe du stator. Le stator comprend également une structure porteuse maintenant les barres fixes les unes par rapport aux autres, la structure porteuse étant montée avec possibilité de rotation sur l'arbre, axialement à l'extérieur des deux disques. La portion externe du stator s'étend parallèlement à l'axe de rotation, axialement à l'extérieur des disques du rotor, jusqu'au niveau de la structure porteuse. Ledit moteur comporte également une unité électronique de pilotage comprenant un circuit imprimé situé à l'une des extrémités du moteur et un ensemble de capteurs, par exemple des sondes à effet Hall, disposés à l'intérieur de la structure du moteur et montés sur le circuit imprimé grâce à des pattes. La carte électronique se présente sous la forme d'un disque dont l'axe est concentrique à la tige et elle comporte des pattes pour connecter les capteurs à ladite carte électronique.

Outre le fait que la position de la carte électronique limite grandement les capacités de traitement de cette dernière, les fils électriques connectant les capteurs à la carte électronique, au moyen des pattes, s'étendent à l'extérieur du moteur risquant ainsi une rupture desdits fils électriques.

On connait également les documents EP 2 495 850 et DE 92 18 701 qui décrivent également des moteurs électriques.

Le document EP 2 495 850 décrit un élément de liaison entre un moteur électrique et un composant électronique procurant une étanchéité entre ledit moteur et le composant électronique. Ledit élément de liaison comporte des joints toriques pour assurer l'étanchéité ainsi que des broches de contact réparties circulairement.

De manière similaire, le document DE 92 18 701 décrit un moteur pas à pas comportant une pièces de liaison entre le moteur électrique et un composant électronique, la pièce de liaison comportant des broches circulairement réparties.

Bien que ces dispositifs permettent de limiter l'encombrement tout en assurant une étanchéité, ils ne sont pas adaptés pour des actionneurs tubulaires pour volets roulants ou stores notamment et ne permettent pas un montage rapide et aisé.

### Divulguation de l'invention

L'un des buts de l'invention est donc de remédier à ces inconvénients en proposant un moteur électrique tubulaire à aimants permanents de conception simple et peu onéreuse et comportant des moyens de connexion.

A cet effet, et conformément à l'invention, il est proposé un moteur électrique tubulaire à aimants permanents comportant au moins un rotor constitué d'au moins un aimant permanent solidaire d'un arbre s'étendant à travers un stator portant une pluralité de bobines, et une carte électronique s'étendant dans le prolongement du corps du stator sensiblement parallèlement à l'arbre, et éventuellement un réducteur ; ledit moteur est remarquable en ce qu'il comporte un connecteur obtenu dans un matériau isolant électriquement, comprenant un flasque qui présente une section droite de même forme que la section droite du corps du stator, une face dite intérieure faisant droit au corps du stator et/ou au corps du réducteur et une face opposée dite extérieure, des moyens de solidarisation dudit flasque sur le corps du stator et/ou le corps du réducteur, et des bornes conductrices faisant saillie de la face intérieure pour assurer le contact avec des fiches connectées aux bobines du stator et faisant saillie de la face extérieure entre des pattes de clipsage de la carte électronique, lesdites pattes de clipsage étant alignées et étant aptes à recevoir par clipsage la carte électronique de telle sorte que lesdites bornes conductrices entrent en contact avec les pistes de la carte électronique lorsque cette dernière est clipsée entre les pattes de clipsage.

De préférence, le flasque est constitué d'un disque, de diamètre sensiblement égal au diamètre du corps du réducteur, dont la face intérieure comporte une jupe cylindrique de diamètre légèrement inférieur au diamètre du disque pour former un épaulement périphérique qui prend appui sur le bord périphérique du réducteur.

Par ailleurs, la face intérieure du disque comporte des pattes de clipsages faisant saillie de la jupe cylindrique, munies à leurs extrémités libres de crochets et aptes à s'étendre dans des rainures pratiquées dans la paroi interne cylindrique de l'extrémité libre du réducteur afin d'assurer la fixation du connecteur sur ledit réducteur.

Lesdites pattes de clipsages sont, de préférence, réparties circulairement et de manière uniforme.

Par ailleurs, la face extérieure du disque comporte un manchon cylindrique s'étendant depuis un trou central pratiqué dans le disque et à travers lesquels s'étend le rotor.

De plus, les bornes conductrices comprennent à leurs extrémités libres une paire de broches qui assurent par pincement le contact électrique avec les pistes de la carte électronique, du côté extérieur du disque, et avec les fiches plates conductrices faisant saillie du fond du réducteur.

Lesdites bornes conductrices sont coudées de telle sorte qu'elles fassent saillies de la face intérieure du disque le long d'une ligne circulaire concentrique au rotor.

### Brève description des dessins

D'autres avantages et caractéristiques ressortiront mieux de la description qui va suivre d'une unique variante d'exécution, donnée à titre d'exemple non limitatif, du moteur électrique tubulaire à aimants permanents conforme à l'invention, en référence aux dessins annexés sur lesquels :
- la figure 1 est une vue en perspective partielle du moteur électrique suivant l'invention,
- la figure 2 est une vue en coupe longitudinale partielle du moteur électrique à aimants permanents suivant l'invention
- la figure 3 est une vue en perspective éclatée partielle du moteur électrique à aimants permanents et de sa carte électronique de commande suivant l'invention,
- la figure 4 est une autre vue en perspective éclatée partielle du moteur électrique à aimants permanents et de sa carte électronique de commande suivant l'invention,
- la figure 5 est une vue en perspective en transparence des moyens de connexion de la carte électronique au moteur suivant l'invention,
- la figure 6 est une autre vue en perspective en transparence des moyens de connexion de la carte électronique au moteur suivant l'invention.

### Mode de réalisation de l'invention

Dans la suite de la description du moteur électrique à aimants permanents suivant l'invention, les mêmes références numériques désignent les mêmes éléments. Les différentes vues ne sont pas nécessairement tracées à l'échelle. Par ailleurs, le moteur électrique à aimants permanents est particulièrement destiné aux actionneurs tubulaires pour volets roulants ou stores notamment ; toutefois, il est bien évident que le moteur électrique à aimants permanents suivant l'invention pourra trouver de nombreuses applications notamment dans le domaine des automatismes sans pour autant sortir du cadre de l'invention.

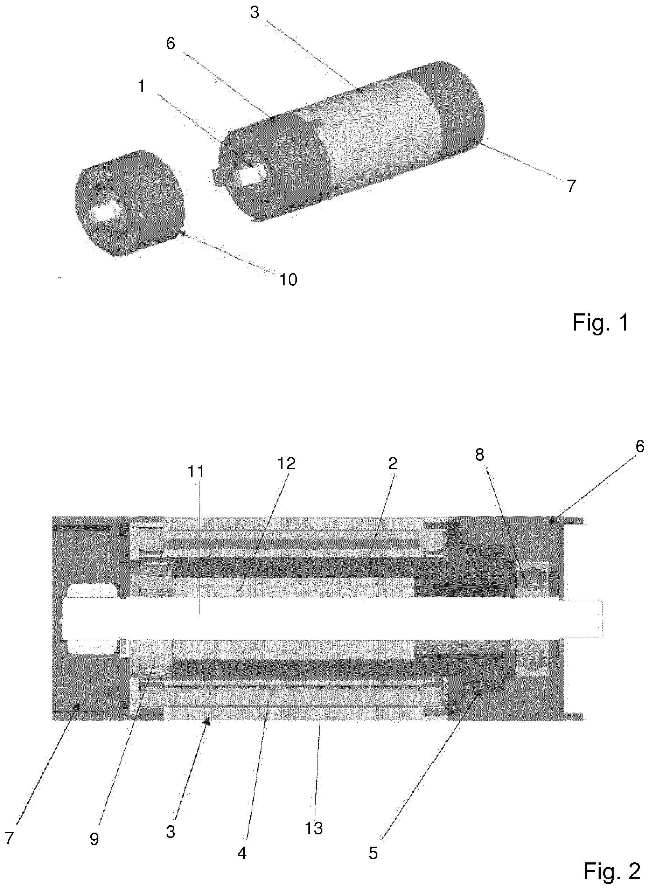

En référence aux figures 1 à 3, le moteur électrique à aimants permanents suivant l'invention est constitué d'un rotor 1 comprenant un aimant permanent en plastoferrite 2 s'étendant à travers un stator 3 portant une pluralité de bobines 4 et accessoirement un frein 5, l'ensemble s'étendant entre un flasque avant 6 et un flasque arrière 7 portant des paliers 8 et 9 sur lesquels prend appui le rotor 1. Le moteur comporte également un réducteur 10 qui, dans cet exemple particulier de réalisation, est un réducteur épicycloïdal ; toutefois, il est bien évident que le réducteur 10 pourra consister dans tout réducteur bien connu de l'homme du métier sans pour autant sortir du cadre de l'invention. Dans cet exemple particulier de réalisation, le moteur comporte trois bobines 4, dont une seule est visible sur la figure 2, uniformément réparties autour du stator 3. Par ailleurs, le moteur comporte au moins un capteur à effet hall, par exemple, pour mesurer l'intensité du champ magnétique, ledit capteur n'étant pas représenté sur les figures.

Le rotor 1 est constitué d'un cylindre en plastoferrite aimanté 2, emmanché et collé sur un arbre 11, ledit cylindre en plastoferrite 2 s'étendant entre les deux paliers 8 et 9 solidaires dudit arbre 11. On entend par « plastoferrite », couramment appelé Feplast, un matériau composé de poudre de ferrite mélangée à un liant thermoplastique. Il est bien évident que le cylindre en plastoferrite 2 suivant l'invention pourra être obtenu par tout procédé de moulage et/ou d'usinage d'un matériau plastoferrite bien connu de l'homme du métier.

De préférence, la paroi intérieure du cylindre en plastoferrite 2 est collée sur la paroi extérieure d'un corps de base 12 cylindrique, coaxial et solidaire de l'arbre 11 du moteur. Ledit cylindre en plastoferrite 2 est collé sur le corps de base 12 cylindrique au moyen d'une colle cyanoacrylate bien connu de l'homme du métier ou au moyen de toute autre colle adaptée bien connue de l'homme du métier telle qu'une colle époxy par exemple.

Par ailleurs, le cylindre en plastoferrite 2 pourra être substitué par un cylindre en plastonéodyme, par exemple, qui est un matériau composé de poudre de néodyme mélangée à un liant thermoplastique et qui est couramment appelé Neoplat sans pour autant sortir du cadre de l'invention.

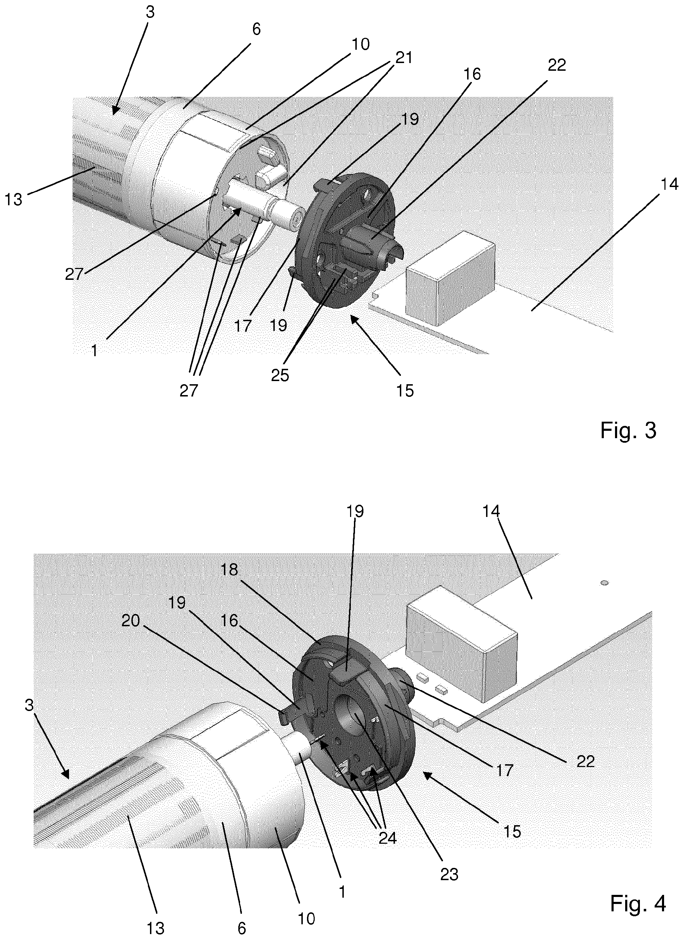

En référence aux figures 2 et 3, le stator 3 est constitué d'une pluralité de couronnes 13 coaxiales, assemblées les unes aux autres par boutonnage par exemple, ou par tout autre procédé bien connu de l'homme du métier. Chaque couronne 13, en référence aux figures 2 et 3, est constituée d'un anneau externe portant une pluralité de dents radiales en forme générale de T inversé s'étendant vers le centre de l'évidement central, ledit évidement central permettant le passage du rotor 1 constitué du cylindre en plastoferrite aimanté 2, emmanché et collé sur l'arbre 11, telle que décrite dans la demande de brevet français FR1463499 déposée par la Demanderesse.

Par ailleurs, en référence aux figures 3 et 4, le moteur électrique suivant l'invention comporte une carte électronique de commande 14 du moteur, et accessoirement de commande du frein 5. Cette carte électronique comprend, de préférence, au moins un filtre de compatibilité électromagnétique dit CEM, un circuit de correction du facteur de puissance, un circuit de redressement et de filtrage, un circuit comportant des transistors bipolaires à grille isolée dits IGBT selon l'acronyme anglosaxon « Insulated Gâte Bipolar Transistor » afin de fournir la tension d'alimentation au moteur électrique et un microcontrôleur apte à déterminer et transmettre les signaux de commande au circuit à transistors IGBT, ainsi qu'un shunt consistant dans un ensemble de résistances de faibles valeurs pour mesurer les courants dans les phases du moteur, tous ces circuits n'étant pas représentés sur les figures 3 et 4.

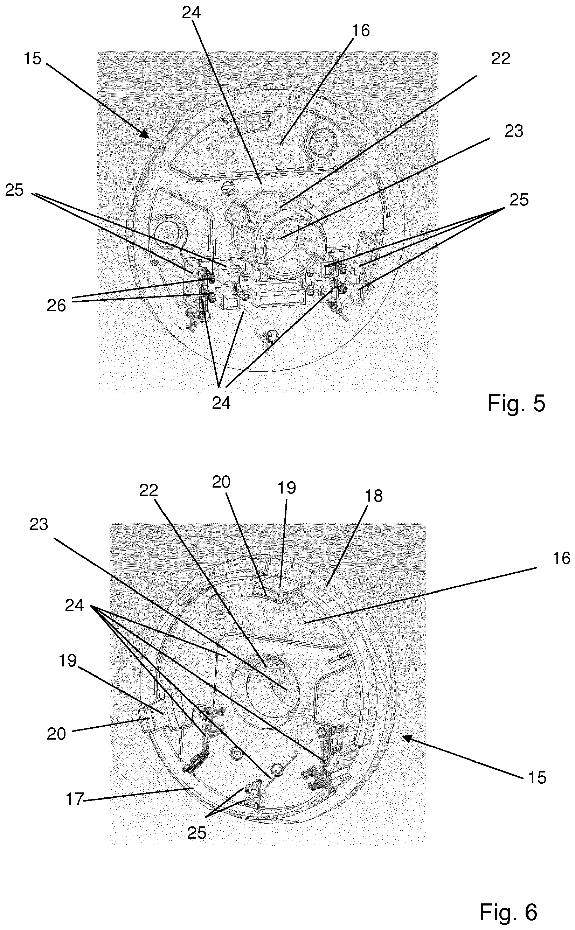

De manière particulièrement avantageuse, en référence aux figures 3 à 6, le moteur suivant l'invention comporte un connecteur 15 se présentant sous la forme d'un flasque cylindrique obtenu dans un matériau isolant, apte à être solidarisé au corps du réducteur 10, et permettant de connecter facilement et rapidement la carte électronique 14 aux trois bobines 4 et au capteur à effet hall comme il sera détaillé plus loin.

Il est bien évident que ledit connecteur 15 pourra être solidarisé au corps du stator 3 et pourra présenter une section droite de forme quelconque, telle qu'une forme carrée par exemple, de même forme que la section droite du corps du réducteur 10 et/ou du stator 3 sans pour autant sortir du cadre de l'invention.

Dans cet exemple de réalisation, le réducteur 10 présentant une forme cylindrique, ledit connecteur 15 est constitué d'un disque 16, de diamètre sensiblement égal au diamètre du corps du réducteur 10, dont la face intérieure, c'est-à-dire la face du disque faisant droit au réducteur 10, comporte une jupe 17 cylindrique de diamètre légèrement inférieur au diamètre du disque 16 pour former un épaulement périphérique 18 qui prend appui sur le bord périphérique du réducteur 10.

La face intérieure du disque 16 comporte également des pattes de clipsages 19, trois pattes de clipsages 19 uniformément réparties dans cet exemple particulier de réalisation, faisant saillie de la jupe cylindrique 17, munies à leurs extrémités libres de crochets 20 et aptes à s'étendre dans des rainures 21 pratiquées dans la paroi interne cylindrique de l'extrémité libre du réducteur 10 afin d'assurer la fixation du connecteur 15 sur ledit réducteur 10.

Il est bien évident que le connecteur 15 pourra comporter plus de trois pattes de clipsages 19 et que lesdites pattes de clipsages 19 pourront être substituées par tout autre moyen de solidarisation du connecteur 15 au réducteur 10 et/ou au corps du stator sans pour autant sortir du cadre de l'invention.

La face extérieure du disque 16 comporte un manchon cylindrique 22 s'étendant depuis un trou central 23 pratiqué dans le disque 16 et à travers lesquels s'étend le rotor 1.

Par ailleurs, le disque 16 comporte des bornes conductrices 24, en l'espèce quatre bornes conductrices 24 dans cet exemple particulier de réalisation, qui sont moulées dans le disque 16 et qui font saillie de part et d'autre des faces intérieure et extérieure dudit disque 16. Lesdites bornes conductrices 24 font saillies de la face extérieure du disque 16 entre des pattes de clipsages 25 solidaires de la face extérieure dudit disque 16, lesdites pattes de clipsage 25 étant alignées et étant aptes à recevoir par clipsage la carte électronique 14 de telle sorte que lesdites bornes conductrices 24 entrent en contact avec les pistes de la carte électronique 14 lorsque cette dernière est clipsée entre les pattes de clipsage 25. Les bornes conductrices 24 comprennent à leurs extrémités libres une paire de broches 26 qui assurent par pincement le contact électrique avec les pistes de la carte électronique 14, du côté extérieur du disque 16, et avec des fiches plates 27 conductrices faisant saillie du fond du réducteur 10, lesdites fiches plates 27 étant électriquement connectées aux bobines du stator 3 et au capteur à effet hall. Dans cet exemple particulier de réalisation, les bornes conductrices 24 sont coudées de telle sorte qu'elles fassent saillies de la face intérieure du disque 16 le long d'une ligne circulaire concentrique au rotor 1.

Il est bien évident que les exemples que l'on vient de donner ne sont que des illustrations particulières et en aucun cas limitatif quant au domaine d'application de l'invention.

## Revendications

1. Moteur électrique tubulaire à aimants permanents comportant au moins un rotor (1) constitué d'au moins un aimant permanent (2) solidaire d'un arbre (11) s'étendant à travers un stator (3) portant une pluralité de bobines, et une carte électronique s'étendant dans le prolongement du corps du stator (3) sensiblement parallèlement à l'arbre (11), et éventuellement un réducteur (10), ***caractérisé* en ce qu'**il comporte un connecteur (15) obtenu dans un matériau isolant électriquement, comprenant un flasque qui présente une section droite de même forme que la section droite du corps du stator (3), une face dite intérieure faisant droit au corps du stator (3) et/ou au corps du réducteur (10) et une face opposée dite extérieure, des moyens de solidarisation dudit flasque sur le corps du stator (3) et/ou le corps du réducteur (10), et des bornes conductrices (24) faisant saillie de la face intérieure pour assurer le contact avec des fiches (27) connectées aux bobines du stator (3) et faisant saillie de la face extérieure entre des pattes de clipsage (25) de la carte électronique (14), lesdites pattes de clipsage (25) étant alignées et étant aptes à recevoir par clipsage la carte électronique (14) de telle sorte que lesdites bornes conductrices (24) entrent en contact avec les pistes de la carte électronique (14) lorsque cette dernière est clipsée entre les pattes de clipsage (25).

2. Moteur électrique selon la revendication 1 ***caractérisé* en ce que** le flasque est constitué d'un disque (16), de diamètre sensiblement égal au diamètre du corps du réducteur (10), dont la face intérieure comporte une jupe (17) cylindrique de diamètre légèrement inférieur au diamètre du disque (16) pour former un épaulement périphérique (18) qui prend appui sur le bord périphérique du réducteur (10).

3. Moteur électrique selon la revendication 2 ***caractérisé* en ce que** la face intérieure du disque (16) comporte des pattes de clipsages (19) faisant saillie de la jupe cylindrique (17), munies à leurs extrémités libres de crochets (20) et aptes à s'étendre dans des rainures (21) pratiquées dans la paroi interne cylindrique de l'extrémité libre du réducteur (10) afin d'assurer la fixation du connecteur (15) sur ledit réducteur (10).

4. Moteur électrique selon la revendication 3 ***caractérisé* en ce que** les pattes de clipsages sont réparties circulairement et de manière uniforme.

5. Moteur électrique selon l'une quelconque des revendications 2 à 4 ***caractérisé* en ce que** la face extérieure du disque (16) comporte un manchon cylindrique (22) s'étendant depuis un trou central (23) pratiqué dans le disque (16) et à travers lesquels s'étend le rotor (1).

6. Moteur électrique selon l'une quelconque des revendications 1 à 5 ***caractérisé* en ce que** les bornes conductrices (24) comprennent à leurs extrémités libres une paire de broches (26) qui assurent par pincement le contact électrique avec les pistes de la carte électronique (14), du côté extérieur du disque (16), et avec les fiches plates (27) conductrices faisant saillie du fond du réducteur (10).

7. Moteur électrique selon la revendication 6 ***caractérisé* en ce que** les bornes conductrices (24) sont coudées de telle sorte qu'elles fassent saillies de la face intérieure du disque le long d'une ligne circulaire concentrique au rotor (1).
